(19) Europäisches Patentamt
European Patent Office
Office européen des brevets

(11) EP 2 132 137 B1

(12) EUROPÄISCHE PATENTSCHRIFT

(45) Veröffentlichungstag und Bekanntmachung des Hinweises auf die Patenterteilung:
**11.05.2011 Patentblatt 2011/19**

(21) Anmeldenummer: **08734828.0**

(22) Anmeldetag: **28.03.2008**

(51) Int Cl.:
***C01B 33/04*** (2006.01) ***C01G 17/00*** (2006.01)
***C01B 6/00*** (2006.01) ***C01B 6/06*** (2006.01)

(86) Internationale Anmeldenummer:
**PCT/EP2008/002452**

(87) Internationale Veröffentlichungsnummer:
**WO 2008/119505 (09.10.2008 Gazette 2008/41)**

# (54) KATALYTISCHE HYDRIERUNG

CATALYTIC HYDROGENATION

HYDRATATION CATALYTIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.03.2007 DE 102007015750**

(43) Veröffentlichungstag der Anmeldung:
**16.12.2009 Patentblatt 2009/51**

(73) Patentinhaber: **Spawnt Private S.à.r.l.**
**1148 Luxembourg (LU)**

(72) Erfinder:
- **HOLL, Sven**
  **65558 Gückingen (DE)**
- **MOHSSENI-ALA, Sayed-Javad**
  **06766 Bitterfeld-Wolfen (DE)**
- **BAUCH, Christian**
  **06766 Bitterfeld-Wolfen (DE)**
- **Prof. Dr. AUNER, Norbert**
  **61479 Glashütten (DE)**
- **Prof. Dr. HOLTHAUSEN, Max**
  **30559 Hannover (DE)**
- **Prof. Dr. WAGNER, Matthias**
  **61194 Niddatal (DE)**

(74) Vertreter: **Epping - Hermann - Fischer**
**Patentanwaltsgesellschaft mbH**
**Ridlerstrasse 55**
**80339 München (DE)**

(56) Entgegenhaltungen:
**US-A- 4 059 608 US-A- 4 601 798**

- **U. PÄTZOLD ET.AL.: "Katalytische Hydrierung von Halogenmonosilanen mit Tributylzinnhydrid" JOURNAL OF ORGANOMETALLIC CHEMISTRY, Bd. 508, 1996, Seiten 147-152, XP002492628**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 132 137 B1

## Beschreibung

Erfindungsgemäß wird ein Verfahren zur katalytischen Hydrierung von halogenierten Silanen oder Germanen beschrieben, in dem halogenierte Mono-, Oligo- oder Polysilane bzw. -germane mit hydrierten Lewis-Säure-Base-Paaren hydriert oder teilhydriert werden und die teilhalogenierten Lewis-Säure-Base-Paare unter Abgabe von Halogenwasserstoff und insbesondere unter anschließender Zugabe von $H_2$ und dessen Heterolyse an den Lewis-Säure-Base-Paaren wieder hydriert werden.

Im Stand der Technik sind verschiedene Verfahren zur Hydrierung von Silanen und Germanen bekannt. Halogensilane lassen sich mit Metallhydriden wie nach beispielsweise SU 1766925 A1 oder JP 50017035 mit Titanhydrid, nach beispielsweise JP 2003313190 A2 mit Natriumhydrid, nach beispielsweise JP 1234316 oder EP 102293 A2 mit Lithiumhydrid, nach beispielsweise RU 2266293 C1 oder US 5965762 A mit Lithiumaluminiumhydrid oder nach beispielsweise JP 2003119200 A2 mit Natriumborhydrid hydrieren. Das Metallhydrid kann organisch substituiert sein, wie beispielsweise in JP 61063515 A2 für Diethylaluminium-hydrid beschrieben. Halogenierte Oligosilane lassen sich durch Si-Si-Bindungsspaltung mit Halogenwasserstoff in Anwesenheit verschiedener Katalysatoren teilweise hydrieren, wie beispielsweise in EP 737687 A1 oder EP 574912 A1 offengelegt. $SiCl_4$ lässt sich beispielsweise nach US 5716590 katalytisch mit Wasserstoff zu $HSiCl_3$ umsetzen. Auch in Anwesenheit eines Halogenidakzeptors wie A1-, Mg- oder Zn-Metall lassen sich Halogensilane mit Wasserstoff umsetzen, wie beispielsweise in US 2406605, US 5329038 A oder DE 4119578 A1 beschrieben. $SiH_4$ lässt sich beispielsweise nach JP 11156199 AA oder JP 59121110 AA durch Substituentenaustausch aus $HSiCl_3$ gewinnen, wobei gleichzeitig $SiCl_4$ entsteht.

Nachteile der bekannten Verfahren sind einerseits geringe Ausbeuten und eine große Menge an Nebenprodukten und andererseits die Notwendigkeit eines elektrochemischen Schrittes zur Regeneration der Hydrierungsmittel.

Aus dem Stand der Technik ist nach 1) G. C. Welch, R. R. S. Juan, J. D. Masuda, D. W. Stephan, "Reversible, metal-free hydrogen activation", Science 2006, 314, 1124 und 2) G. C. Welch, D. W. Stephan, "Facile heterolytic cleavage of dihydrogen by phoshines and boranes", J. Am. Chem. Soc. 2007, 129, 1880 bekannt, dass eine Kombination aus geeigneten Phosphinen $PR_3$ und Boranen $BR'_3$ Wasserstoff heterolytisch spaltet.

$$PR_3 \quad + \quad BR'_3 \quad \xrightarrow[\text{1 atm, 25 °C}]{} \quad [R_3PH]^+ \; [HBR'_3]^-$$

Der Erfindung liegt die Aufgabe zugrunde, ein Verfahren zur Hydrierung von Silizium- oder Germaniumhalogeniden zu schaffen, mit dem sich eine besonders große Ausbeute bei einem geringen Anteil an Nebenprodukten erzielen lässt.

Diese Aufgabe wird erfindungsgemäß durch ein Verfahren gemäß Patentanspruch 1 gelöst.

Vorteilhafte Weiterbildungen der Erfindung sind in den Unteransprüchen beschrieben.

Vorzugsweise werden als Lewis-Base ein $R_3E$ mit E = N, P oder As und R = Alkyl, Aryl, O-Alkyl, O-Aryl oder Halogen und als Lewis-Säure ein $R'_3E'$ mit E' = B, A1 oder Ga und mit R'= Alkyl, Aryl, halogenierte Alkyl- und Arylsubstituenten oder Halogen verwendet.

Die bevorzugten Elemente der IV. Hauptgruppe sind mit Chlor oder Fluor halogeniert.

Die Hydrierung des Lewis-Säure-Base-Paares erfolgt vorzugsweise mit einer Temperatur zwischen -80 °C und 200 °C. Ferner erfolgt die Hydrierung des Lewis-Säure-Base-Paares vorzugsweise bei einem Druck zwischen 0,1 MPa und 10,0 MPa.

Die Hydrierung des halogenierten Silans/Germans wird vorzugweise mit einer Temperatur zwischen -20°C und 200 °C durchgeführt. Ferner wird die Hydrierung des halogenierten Silans/German-s-vorzugsweise-mit einem Druck zwischen 0,05 MPa und 0,5 MPa durchgeführt.

In Weiterbildung des erfindungsgemäßen Verfahrens werden die in einem Hydrierungsreaktor als Feststoff ausfallenden Element-Wasserstoff-Verbindungen der IV. Hauptgruppe durch eine Abzugsvorrichtung am Boden des Reaktors abgezogen. Die im Hydrierungsreaktor ausgasenden Element-Wasserstoff-Verbindungen der IV. Hauptgruppe werden vorzugsweise über eine Abzugsvorrichtung gewonnen.

Der in einem Reaktionsreaktor entstehende Halogenwasserstoff wird vorzugsweise thermisch ausgetrieben und über ein Ventil dem Prozess entnommen. Die Abspaltung des Halogenwasserstoffes erfolgt vorzugsweise bei Temperaturen zwischen 100 °C und 300 °C.

Bei einer speziellen Ausführungsform des erfindungsgemäßen Verfahrens werden der zweite Schritt in einem ersten Reaktor und der dritte Schritt in einem zweiten Reaktor durchgeführt. Vorzugsweise wird dabei das regenerierte Lewis-Säure-Base-Paar dem ersten Reaktor wieder zugeführt.

Zweckmäßigerweise wird das halogenhaltige Lewis-Säure-Base-Paar im dritten Schritt durch erneute Zugabe

von $H_2$ erneut hydriert.

Grundlage des erfindungsgemäßen Verfahrens ist die Realisierung eines Katalysatorsystems zur katalytischen Umwandlung von monomeren, oligomeren oder polymeren Halogensilanen in die entsprechenden hydrierten Polysilane $Si_nH_{n+2}$ und $[SiH_2]_n$ mittels $H_2$. Das Gleiche gilt für den Einsatz von Germanen.

Entsprechendes gilt auch für Gemische aus unterschiedlichen halogenierten Silanen oder Germanen.

Diese katalytische Umwandlung kann wie folgt dargestellt werden:

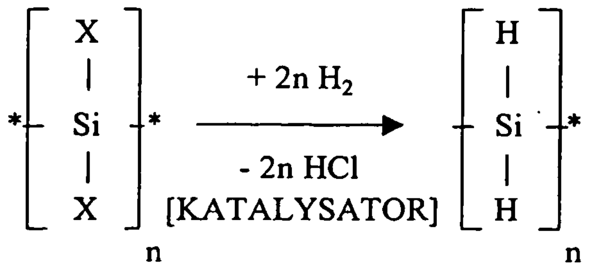


Das neue Verfahren schließt neben der Hydrierung von halogenierten Oligo- oder Polysilanen auch die entsprechende Umwandlung von Tetrachlorsilan oder halogenierten Monosilanen in $SiH_4$ ein.

Das neue Verfahren der katalytischen Hydrierung ermöglicht auch Teilhydrierungen wie z. B. von $SiCl_4$ zu $HSiCl_3$ wobei diese teilhydrierten Produkte an sich einer weiteren Verwendung zugeführt werden können oder zur vollständigen Hydrierung in den Prozess zurückgeführt werden können.

Aus dem Stand der Technik ist bekannt, dass Lewis-Säure-Base-Paare, die auf Grund Ihrer sterisch gehinderten Struktur keine direkten Addukte bilden können, als Katalysatoren zur heterolytischen Spaltung von $H_2$ dienen können. Lewis-Säure und Lewis-Base können als getrennte Verbindungen vorliegen, sie können jedoch auch innerhalb einer molekularen Verbindung enthalten sein. Weiterhin können die katalytisch aktiven Verbindungen auf Trägerkörpern fixiert vorliegen. Als Lewis-Basen können Verbindungen der Elemente E = N, P oder As dienen, als Lewis-Säuren Verbindungen der Elemente E' = B, A1 und Ga.

Der neue Katalysezyklus durchläuft beispielsweise zur Hydrierung von halogenierten Silanen folgenden Kreislauf

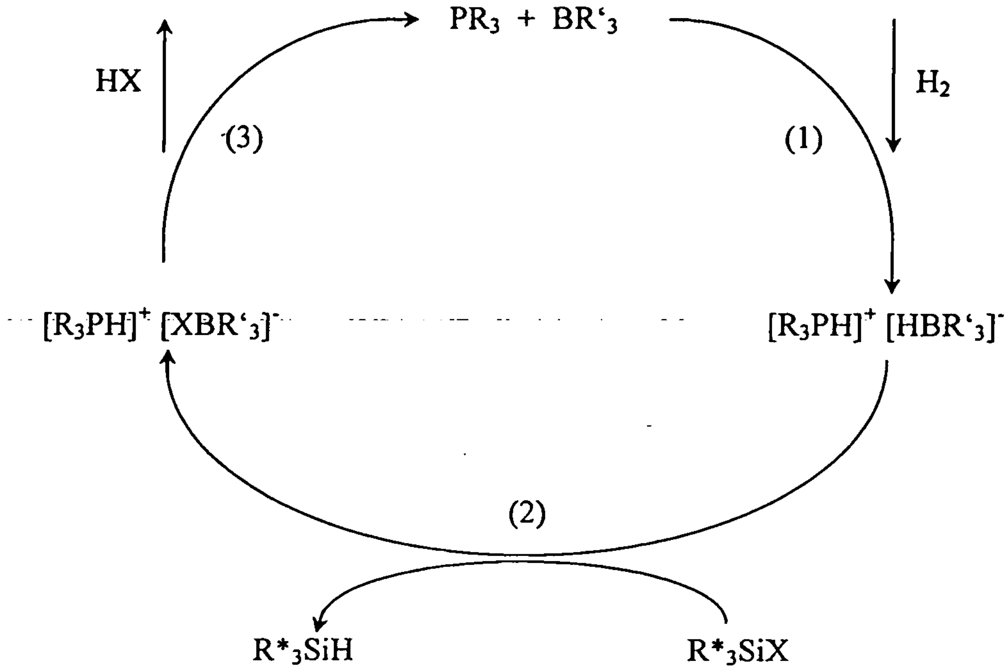

wobei R = Alkyl, Aryl, O-Alkyl, O-Aryl oder Halogen sein kann, R'= Alkyl, Aryl, halogenierte Alkyl- und Arylsubstituenten oder Halogene sein können, R* = H, Halogen, Alkyl, Aryl, Silyl, O-Alkyl oder O-Aryl und X = F, Cl, Br, I ist.

Das erfindungsgemäße Verfahren verläuft im Wesentlichen in drei Schritten:

- die Heterolyse von $H_2$ (Schritt 1) durch den Katalysator erfolgt vorzugsweise im Temperaturbereich von -80°C bis 200 °C bei Drücken von 0,1 MPa - 10,0 MPa,- die Hydrierung der Halogenverbindungen ($R^*_3SiX$) und die Abtrennung der hydrierten Produkte erfolgt in einem Schritt 2 vorzugsweise bei -20°C bis 200°C und einem Druck von 0,05 - 0,5 MPa,
- in einem dritten Schritt wird die Abspaltung von HX thermisch oder ggf. mit Hilfe sterisch sehr anspruchsvoller und/oder nichtnucleophiler Basen durchgeführt. Die thermische Abspaltung geschieht vorzugsweise bei 100°C bis 300°C.

Das erfindungsgemäße Verfahren ist in einer ersten Ausführungsform in der Figur 1 dargestellt. In dieser Ausführungsform werden Hydrierung des Katalysators, Umsetzung des Silanes/Germanes und Regeneration des Katalysators in einem einheitlichen Lösungsmittel oder Lösungsmittelgemisch durchgeführt.

Das erfindungsgemäße Verfahren ist in einer zweiten Ausführungsform in der Figur 2 dargestellt. In dieser Ausführungsform kann die Hydrierung des Katalysators in einem anderen Lösungsmittel oder Lösungsmittelgemisch erfolgen als die Umsetzung des Silanes/Germanes und der Katalysator wird vor der Regeneration durch Destillation isoliert.

Bezugszeichenliste

1. Überleitung zum Hydrierungsreaktor 4
2. Zuführung von halogeniertem Silan oder German
3. Abführung gasförmiger hydrierter Silane und teilhydrierter Halogensilane bzw. Halogengermane
4. Hydrierungsreaktor
5. Gasförmig vorliegende hydrierte Silane und teilhydrierte Halogensilane bzw. entsprechende Germane
6. Zuführstutzen für halogeniertes Silan oder German
7. Reaktionsmischung im Hydrierungsreaktor
8. Ausfällung hydrierter Polysilane oder teilhydrierter halogenierter Polysilane bzw. entsprechender Germane
9. Abzugstutzen
10. Umwälzpumpe
11. Zuführung verbrauchter Lewis-Säure-Base-Paare zur Regeneration
12. Regenerationsreaktor zum Austreiben von HX
13. Heizschlange
14. Flüssigkeitsstand im Regenerationsreaktor
15. Ablassstutzen für gasförmiges HX
16. Ablassventil
17. Gasförmiges HX
18. Kühler
19. Zuführstutzen für $H_2$
20. Reaktionsmischung zur Heterolyse von $H_2$
21. Reaktor zur Re-Hydrierung der Lewis-Säure-Base-Paare
22. Zuführventil für $H_2$
23. Zuführung von $H_2$
24. Abzugstutzen für entgasten Katalysator
25. Heizmantel
26. Füllstand Regenerationsreaktor
27. Ablassstutzen für Lösungsmitteldampf und gasförmiges HCl
28. Ablassventil
29. Gasförmiges Lösungsmittel und/oder HCl
30. Abzugstutzen für hydrierten Katalysator
31. Zuführung für Lösungsmittel und entgasten Katalysator
32. Zuführung von Lösungsmittel
33. Zuführung für hydrierten Katalysator

## Patentansprüche

1. Verfahren zur Hydrierung von Silizium- oder Germaniumhalogeniden, **dadurch gekennzeichnet, dass** in einem ersten Schritt ein Lewis-Säure-Base-Paar unter Zugabe von $H_2$ hydriert wird und in einem zweiten Schritt monomere, oligomere oder polymere Si- oder Ge-Halogenide mit einem $H^-$ enthaltenden Lewis-Säure-Base-Paar hydriert werden und in einem dritten Schritt das halogenhaltige Lewis-Säure-Base-Paar unter Abscheidung von halogeniertem Wasserstoff regeneriert wird.

2. Verfahren zur Hydrierung von Silizium- oder Germaniumhalogeniden gemäß Anspruch 1, **dadurch gekennzeichnet, dass** als Lewis-Base ein $R_3E$ mit E = N, P oder As und R = Alkyl, Aryl, O-Alkyl, O-Aryl oder Halogen und als Lewis-Säure ein $R'_3E'$ mit E' = B, Al oder Ga und mit R' = Alkyl, Aryl, halogenierte Alkyl- und Arylsubstituenten oder Halogen verwendet wird.

3. Verfahren zur Hydrierung von Silizium- oder Germaniumhalogeniden gemäß Anspruch 1 oder 2, **dadurch gekennzeichnet, dass** die bevorzugten Elemente der IV. Hauptgruppe mit Chlor oder Fluor halogeniert sind.

4. Verfahren zur Hydrierung von Silizium- und Germaniumhalogeniden gemäß einem der Ansprüche 1-3, **dadurch gekennzeichnet, dass** die Hydrierung des Lewis-Säure-Base-Paares mit einer Temperatur zwischen -80 °C und 200 °C durchgeführt wird.

5. Verfahren zur Hydrierung von Silizium- und Germaniumhalogeniden gemäß einem der Ansprüche 1-4, **dadurch gekennzeichnet, dass** die Hydrierung des Lewis-Säure-Base-Paares bei einem Druck zwischen 0,1 MPa und 10,0 MPa durchgeführt wird.

6. Verfahren zur Hydrierung von Silizium- und Germaniumhalogeniden gemäß einem der Ansprüche 1-5, **dadurch gekennzeichnet, dass** die Hydrierung des halogenierten Silans/Germans mit einer Temperatur zwischen -20 °C und 200 °C durchgeführt wird.

7. Verfahren zur Hydrierung von Silizium- und Germaniumhalogeniden gemäß einem der Ansprüche 1-6, **dadurch gekennzeichnet, dass** die Hydrierung des halogenierten Silans/Germans mit einem Druck zwischen 0,05 MPa und 0,5 MPa durchgeführt wird.

8. Verfahren zur Hydrierung von Silizium- und Germaniumhalogeniden gemäß einem der Ansprüche 1-7, **dadurch gekennzeichnet, dass** die in einem Hydrierungsreaktor (4) als Feststoff ausfallenden Element-Wasserstoff-Verbindungen der IV. Hauptgruppe durch eine Abzugsvorrichtung am Boden des Reaktors abgezogen werden.

9. Verfahren zur Hydrierung von Silizium- und Germaniumhalogeniden gemäß einem der Ansprüche 1-8, **dadurch gekennzeichnet, dass** die in einem Hydrierungsreaktor (4) ausgasenden Element-Wasserstoff-Verbindungen der IV. Hauptgruppe über eine Abzugsvorrichtung gewonnen werden.

10. Verfahren zur Hydrierung von Silizium- und Germaniumhalogeniden gemäß einem der Ansprüche 1-9, **dadurch gekennzeichnet, dass** in einem Regenerationsreaktor (12) entstehender Halogenwasserstoff thermisch ausgetrieben und über ein Ventil (16) dem Prozess entnommen wird.

11. Verfahren zur Hydrierung von Silizium- und Germaniumhalogeniden gemäß einem der Ansprüche 1-10, **dadurch gekennzeichnet, dass** die thermische Abspaltung des Halogenwasserstoffes bei Temperaturen zwischen 100 °C und 300 °C erfolgt.

12. Verfahren zur Hydrierung von Silizium- und Germariumhalogeniden nach einem der vorangehenden Ansprüche, **dadurch gekennzeichnet, dass** der zweite Schritt in einem ersten Reaktor und der dritte Schritt in einem zweiten Reaktor durchgeführt werden.

13. Verfahren zur Hydrierung von Silizium- und Germaniumhalogeniden nach Anspruch 12, **dadurch gekennzeichnet, dass** das regenerierte Lewis-Säure-Base-Paar dem ersten Reaktor wieder zugeführt wird.

14. Verfahren zur Hydrierung von Silizium- und Germaniumhalogeniden nach einem der vorangehenden Ansprüche, **dadurch gekennzeichnet, dass** das halogenhaltige Lewis-Säure-Base-Paar im dritten Schritt unter erneuter Zugabe von $H_2$ erneut hydriert wird.

## Claims

1. Process for hydrogenating silicon halides or germanium halides, **characterized in that** in a first step a Lewis acid-base pair is hydrogenated with addition of $H_2$, and in a second step monomeric, oligomeric or polymeric silicon halides or germanium halides are hydrogenated with an $H^-$-containing Lewis acid-base pair, and in a third step the halogenated Lewis acid-base pair is regenerated with elimination of halogenated hydrogen.

2. Process for hydrogenating silicon halides or germanium halides according to Claim 1, **characterized in that** the Lewis base used is an $R_3E$ where E = N, P or As and R = alkyl, aryl, O-alkyl, O-aryl or halogen, and the Lewis acid used is an R'3E' where E' = B, Al or Ga and where R' = alkyl, aryl, halogenated alkyl and aryl substituents or halogen.

3. Process for hydrogenating silicon halides or germanium halides according to Claim 1 or 2, **characterized in that** the preferred elements of main group IV are halogenated with chlorine or fluorine.

4. Process for hydrogenating silicon halides and germanium halides according to any of Claims 1-3, **characterized in that** the hydrogenation of the Lewis acid-base pair is performed at a temperature between -80°C and 200°C.

5. Process for hydrogenating silicon halides and germanium halides according to any of Claims 1-4, **characterized in that** the hydrogenation of the Lewis acid-base pair is performed at a pressure between 0.1 MPa and 10.0 MPa.

6. Process for hydrogenating silicon halides and germanium halides according to any of Claims 1-5, **characterized in that** the hydrogenation of the halogenated silane/germane is performed at a temperature between -20°C and 200°C.

7. Process for hydrogenating silicon halides and germanium halides according to any of Claims 1-6, **characterized in that** the hydrogenation of the halogenated silane/germane is performed at a pressure between 0.05 MPa and 0.5 MPa.

8. Process for hydrogenating silicon halides and germanium halides according to any of Claims 1-7, **characterized in that** the element-hydrogen compounds of main group IV which precipitate out in solid form in a hydrogenation reactor (4) are removed by means of a outlet device at the base of the reactor.

9. Process for hydrogenating silicon halides and germanium halides according to any of Claims 1-8, **characterized in that** the element-hydrogen compounds of main group IV which outgas in a hydrogenation reactor (4) are obtained via an outlet device.

10. Process for hydrogenating silicon halides and germanium halides according to any of Claims 1-9, **characterized in that** hydrogen halide formed in a regeneration reactor (12) is driven out thermally and withdrawn from the process via a valve (16).

11. Process for hydrogenating silicon halides and germanium halides according to any of Claims 1-10, **characterized in that** the hydrogen halide is eliminated thermally at temperatures between 100°C and 300°C.

12. Process for hydrogenating silicon halides and germanium halides according to any of the preceding claims, **characterized in that** the second step is performed in a first reactor and the third step in a second reactor.

13. Process for hydrogenating silicon halides and germanium halides according to Claim 12, **characterized in that** the regenerated Lewis acid-base pair is fed back to the first reactor.

14. Process for hydrogenating silicon halides and germanium halides according to any of the preceding claims, **characterized in that** the halogenated Lewis acid-base pair is hydrogenated again in the third step with further addition of $H_2$.

## Revendications

1. Procédé d'hydrogénation d'halogénures de silicium ou de germanium, **caractérisé en ce que** lors d'une première étape, une paire acide-base de Lewis est hydrogénée par ajout d'$H_2$ et, lors d'une deuxième étape, des halogénures

de Si ou Ge monomères, oligomères ou polymères sont hydrogénés avec une paire acide-base de Lewis contenant $H^-$ et, lors d'une troisième étape, la paire acide-base de Lewis contenant un halogène est régénérée par élimination d'hydrogène halogéné.

2. Procédé d'hydrogénation d'halogénures de silicium ou de germanium selon la revendication 1, **caractérisé en ce qu'**un $R_3E$ avec E = N, P ou As et R = alkyle, aryle, O-alkyle, O-aryle ou halogène est utilisé en tant que base de Lewis et un $R'_3E'$ avec E' = B, A1 ou Ga et avec R' = alkyle, aryle, substituants alkyle et aryle halogénés ou halogène est utilisé en tant qu'acide de Lewis.

3. Procédé d'hydrogénation d'halogénures de silicium ou de germanium selon la revendication 1 ou 2, **caractérisé en ce que** les éléments préférés du groupe principal IV sont halogénés avec du chlore ou du fluor.

4. Procédé d'hydrogénation d'halogénures de silicium et de germanium selon l'une quelconque des revendications 1 à 3, **caractérisé en ce que** l'hydrogénation de la paire acide-base de Lewis est réalisée avec une température comprise entre -80°C et 200 °C.

5. Procédé d'hydrogénation d'halogénures de silicium et de germanium selon l'une quelconque des revendications 1 à 4, **caractérisé en ce que** l'hydrogénation de la paire acide-base de Lewis est réalisée à une pression comprise entre 0,1 MPa et 10,0 MPa.

6. Procédé d'hydrogénation d'halogénures de silicium et de germanium selon l'une quelconque des revendications 1 à 5, **caractérisé en ce que** l'hydrogénation du silane/germanium halogéné est réalisée avec une température comprise entre -20°C et 200 °C.

7. Procédé d'hydrogénation d'halogénures de silicium et de germanium selon l'une quelconque des revendications 1 à 6, **caractérisé en ce que** l'hydrogénation du silane/germanium halogéné est réalisée avec une pression comprise entre 0,05 MPa et 0,5 MPa.

8. Procédé d'hydrogénation d'halogénures de silicium et de germanium selon l'une quelconque des revendications 1 à 7, **caractérisé en ce que** les composés hydrogène-élément du groupe principal IV formés sous forme solide dans un réacteur d'hydrogénation (4) sont rectifiés au fond du réacteur par un dispositif de sorbonne.

9. Procédé d'hydrogénation d'halogénures de silicium et de germanium selon l'une quelconque des revendications 1 à 8, **caractérisé en ce que** les composés hydrogène-élément du groupe principal IV émis sous forme gazeuse dans un réacteur d'hydrogénation (4) sont récupérés par un dispositif de sorbonne.

10. Procédé d'hydrogénation d'halogénures de silicium et de germanium selon l'une quelconque des revendications 1 à 9, **caractérisé en ce que** l'halogénure d'hydrogène formé dans un réacteur de régénération (12) est extrait thermiquement et déduit du procédé par une vanne (16).

11. Procédé d'hydrogénation d'halogénures de silicium et de germanium selon l'une quelconque des revendications 1 à 10, **caractérisé en ce que** le clivage thermique de l'halogénure d'hydrogène a lieu à des températures comprises entre 100 °C et 300 °C.

12. Procédé d'hydrogénation d'halogénures de silicium et de germanium selon l'une quelconque des revendications précédentes, **caractérisé en ce que** la deuxième étape est réalisée dans un premier réacteur et la troisième étape dans un deuxième réacteur.

13. Procédé d'hydrogénation d'halogénures de silicium et de germanium selon la revendication 12, **caractérisé en ce que** la paire acide-base de Lewis régénérée est réintroduite dans le premier réacteur.

14. Procédé d'hydrogénation d'halogénures de silicium et de germanium selon l'une quelconque des revendications précédentes, **caractérisé en ce que** la paire acide-base de Lewis contenant un halogène est de nouveau hydrogénée lors de la troisième étape par un nouvel ajout d'$H_2$.

Figur 1

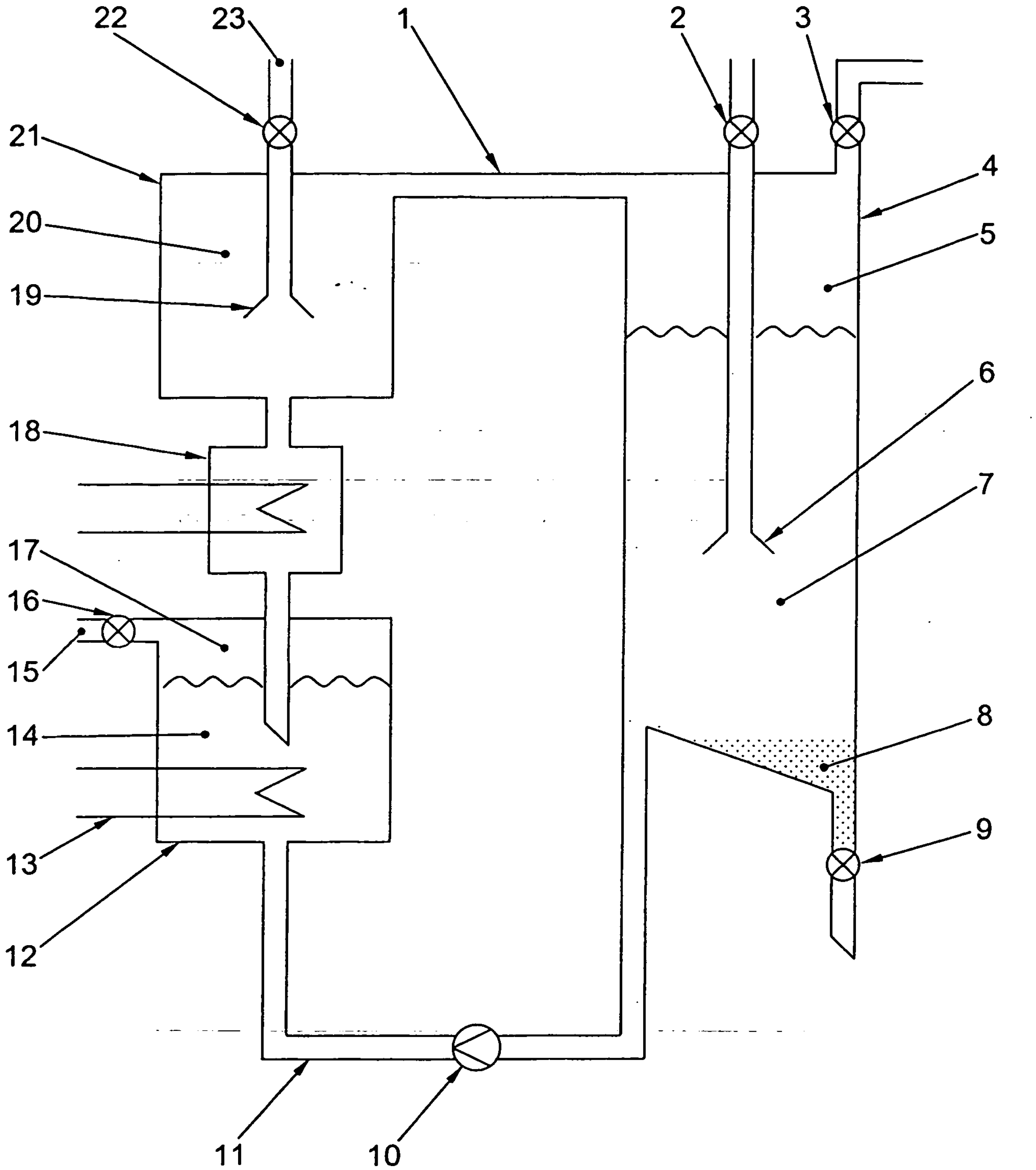

Figur 2

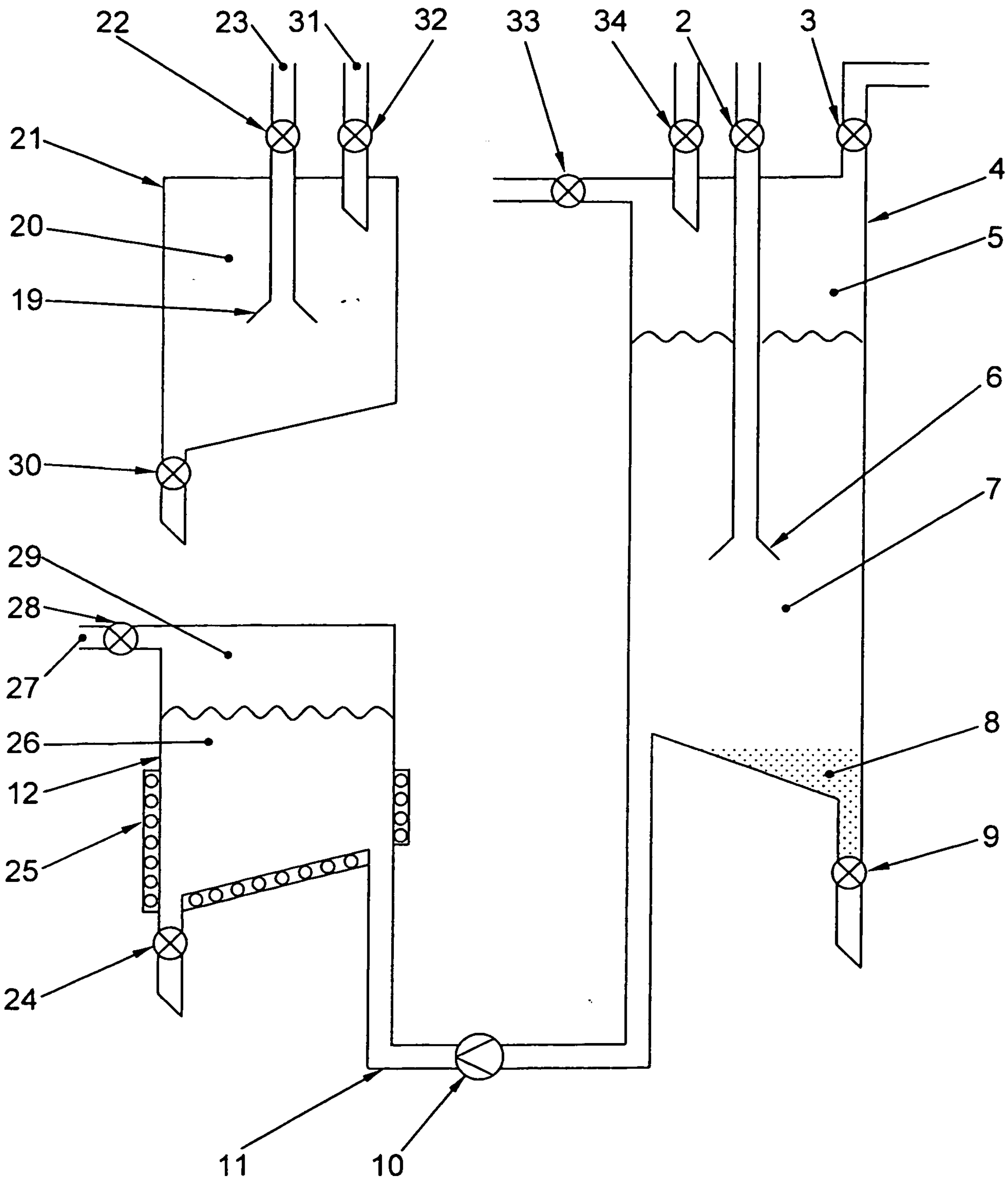

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- SU 1766925 A1
- JP 50017035 B
- JP 2003313190 A
- JP 1234316 A
- EP 102293 A2
- RU 2266293 C1
- US 5965762 A
- JP 2003119200 A
- JP 61063515 A
- EP 737687 A1
- EP 574912 A1
- US 5716590 A
- US 2406605 A
- US 5329038 A
- DE 4119578 A1
- JP 11156199 AA
- JP 59121110 AA


### In der Beschreibung aufgeführte Nicht-Patentliteratur


- **G. C. Welch ; R. R. S. Juan ; J. D. Masuda ; D. W. Stephan.** Reversible, metal-free hydrogen activation. *Science,* 2006, vol. 314, 1124
- **G. C. Welch ; D. W. Stephan.** Facile heterolytic cleavage of dihydrogen by phoshines and boranes. *J. Am. Chem. Soc.,* 2007, vol. 129, 1880